# EUROPEAN PATENT APPLICATION

(11) **EP 4 621 482 A1**
(43) Date of publication of application: **24.09.2025**
(21) Application number: 23891929.4
(22) Date of filing: 10.11.2023
(51) Int. Cl.: G03B 17/55, G03B 17/12, H05B 3/03, H05B 3/06

(54) **CAMERA MODULE**

(30) Priority: 18.11.2022 KR 20220155834
(71) Applicant: LG INNOTEK CO. LTD, Gangseo-gu Seoul 07796 (KR)
(72) Inventor: HWANG, Sun Min, Seoul 07796 (KR)
(74) Representative: M. Zardi & Co S.A.
(86) International application number: PCT/KR2023/018090
(87) International publication number: WO 2024/106862

(57) **Abstract**

The camera module includes: a body: a lens barrel coupled to the body; a lens disposed at one side of the lens barrel; a heating member disposed outside the lens; a substrate module disposed to be spaced apart from the lens in an optical axis direction; and a connection member for connecting the substrate module and the heating member, wherein the heating member includes a heating layer, a first electrode disposed on one surface of the heating layer, and a second electrode disposed on the other surface of the heating layer, and the first electrode and the second electrode are disposed to be spaced apart from each other in the optical axis direction.

## Description

### [Technical Field]

The teachings in accordance with exemplary and non-limiting embodiments of the present invention relate generally to a camera module.

### [Background Arts]

Recently, ultra-compact camera modules have been developed, and the ultra-compact camera modules are widely used in small electronic products such as smartphones, laptops, and game consoles.

As the spread of automobiles becomes more popular, ultra-compact cameras are used not only in small electronic products but also in vehicles. For example, there are black box cameras for protecting vehicles or for objective data on traffic accidents, rear-view surveillance cameras that allow drivers to monitor the blind spot at the rear of the vehicle through a screen to ensure safety when reversing, and peripheral detection cameras that allow monitoring of the vehicle's surroundings.

The camera may be equipped with a lens, a lens barrel that houses the lens, an image sensor that converts an image of a subject collected by the lens into an electrical signal, and a printed circuit board on which the image sensor is mounted. A housing that forms the exterior of the camera is made of a fully enclosed structure to prevent the internal components from being contaminated by foreign substances containing moisture.

Due to the nature of cars that are placed outdoors, the temperature inside and outside the car can vary depending on the season. For example, the temperature inside the car can be higher than the temperature outside in summer, and it can drop below zero in winter. Therefore, condensation, including frost, may occur on the components of the camera, including the lens and glass, due to sudden changes in temperature. This may result in unsatisfactory images or product failure.

### [Summary of the Invention]

### [Technical Subject]

The present exemplary embodiment is intended to provide a camera module that can prevent condensation from occurring on the lens, including frost.

### [Technical Solution]

A camera module according to an exemplary embodiment of the present invention may comprise: a body: a lens barrel coupled to the body; a lens disposed at one side of the lens barrel; a heating member disposed outside the lens; a substrate module disposed to be spaced apart from the lens in an optical axis direction; and a connection member for connecting the substrate module and the heating member, wherein the heating member includes a heating layer, a first electrode disposed on one surface of the heating layer, and a second electrode disposed on the other surface of the heating layer, and the first electrode and the second electrode are disposed to be spaced apart from each other in the optical axis direction.

Preferably, but not necessarily, the heating layer may include a resin or a PTC (Positive Temperature Coefficient) material.

Preferably, but not necessarily, a first bus bar and a second bus bar may be electrically connected to the plurality of connection parts.

Preferably, but not necessarily, the first bus bar and the second bus bar may have different polarities.

Preferably, but not necessarily, the first bus bar and the second bus bar may be spaced apart in a direction perpendicular to an optical axis direction.

Preferably, but not necessarily, the first bus bar and the second bus bar may each be formed of multiple pieces, the plurality of first bus bars may include a first-1 bus bar and a first-2 bus bar, and the plurality of second bus bars may include a second-1 bus bar and a second-2 bus bar, and the first-1 bus bar may be disposed between the second-1 bus bar and the second-2 bus bar.

Preferably, but not necessarily, the first-1 bus bar and the second-1 bus bar may not overlap in the radial direction of the lens barrel.

Preferably, but not necessarily, the plurality of connection parts may include a first connection part connected to the first bus bar and a second connection part connected to the second bus bar, and an upper end of the first connection part connected to the bus bar and an upper end of the second connection part may differ in height.

A camera module according to another exemplary embodiment may comprise: a body; a lens barrel coupled to the body; a lens disposed on one side of the lens barrel; a heating member disposed on the outside of the lens; a substrate module disposed by being spaced apart from the lens in the optical axis direction; and a connection member connecting the substrate module and the heating member, wherein the connection member includes a plurality of connection parts connected to the substrate module and a plurality of bus bars connected to the heating member, and the plurality of bus bars includes a first bus bar and a second bus bar spaced apart from the first bus bar.

### [Advantageous Effects]

The exemplary embodiments of the present invention have the advantage of compactly arranging the connection member for connecting the substrate module to the heating member in the body and lens barrel, thereby improving the assembly of the camera module while simultaneously providing a stable power connection to the heating member.

In addition, the heat generated by the heating member is not concentrated on one side, but is evenly distributed throughout the heating member, which has the advantage of removing the frost on the lens evenly across the entire area, rather than just one area.

### [Brief Descriptions of Drawings]

FIG. 1 is a perspective view of the exterior of a camera module according to an embodiment of the present invention.
FIG. 2 is a drawing of FIG. 1 from a different angle.
FIG. 3 is a top view of a camera module according to an embodiment of the present invention.
FIG. 4 is a cross-sectional view of FIG. 3.
FIG. 5 is a cross-sectional view of B-B' in FIG. 3.
FIG. 6 is an exploded perspective view of a camera module according to an embodiment of the present invention.
FIG. 7 is a drawing of FIG. 6 from a different angle.
FIG. 8 is an exploded perspective view of the power connection structure within a camera module according to an embodiment of the present invention.
FIG. 9 is a perspective view showing a coupled structure between a body and a printed circuit board according to an embodiment of the present invention.
FIG. 10 is a top view showing a body and an upper surface of a lens barrel according to an embodiment of the present invention.
FIG. 11 is a perspective view showing an upper surface of the body according to an embodiment of the present invention.
FIG. 12 is a perspective view of a lower surface of a body according to an embodiment of the present invention.
FIG. 13 is a perspective view of the first connection member according to an embodiment of the present invention.
FIG. 14 is a drawing for explaining a power connection structure within a camera module according to an embodiment of the present invention.
FIG. 15 is a drawing that magnifies D in FIG. 4.
FIG.16 is a perspective view of a vehicle according to an embodiment of the present invention.

### [Best Modes]

Hereinafter, the attached drawings are referred to in detail to explain the preferred embodiment of the present invention.

However, the technical idea of the present invention is not limited to the some embodiments described, but can be implemented in various different forms, and within the scope of the technical idea of the present invention, one or more of the components between the embodiments can be selectively combined or replaced.

In addition, the terms used in the embodiments of the present invention (including technical and scientific terms) can be interpreted to mean what a person with ordinary skill in the art would understand, unless explicitly defined and described, and generally understood by a person with ordinary skill in the art. Generally used terms, such as those defined in dictionaries, can be interpreted in the context of the relevant technology.

In addition, the terms used in the embodiments of the present invention are intended to explain the embodiments and are not intended to limit the invention. In this specification, the singular form may include the plural form unless otherwise specified in the text, and when described as 'A and (and/and) B, C, at least one (or more than one) of A, B, and C,' it may include one or more of all combinations of A, B, and C.

In addition, terms such as 1, 2, A, B, (a), and (b) may be used to describe the components of the embodiments of the present invention.

Such terms are intended only to distinguish the component from other components and are not limited by the nature, order, or sequence of the component.

And, if any component is described as being 'connected', 'coupled' or 'attached' to another component, that component may be directly connected, coupled or attached to that other component, as well as being 'connected', 'coupled' or 'attached' to another component that is between that component and that other component.

In addition, when it is stated that each component is formed or arranged 'above or below', the above or below includes not only the case where two components are directly in contact with each other, but also the case where one or more other components are formed or arranged between the two components. In addition, when it is expressed as 'upper or lower', it can include the meaning of the lower direction as well as the upper direction based on one component.

The 'optical axis direction' used below is defined as the optical axis direction of the lens. Meanwhile, the 'optical axis direction' can be correlated with the 'vertical direction,' 'z-axis direction,' etc.

Hereafter, the present invention will be explained in more detail according to the attached drawings.

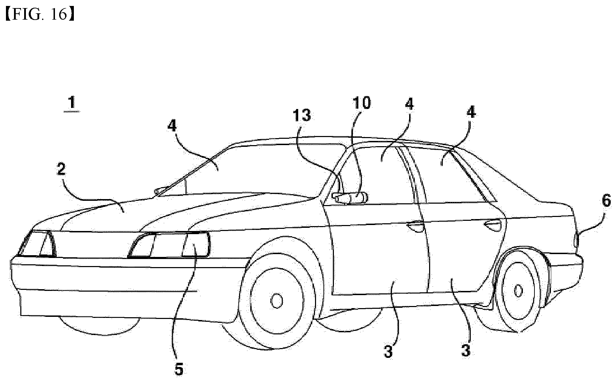

FIG. 16 is a perspective view of a vehicle according to an embodiment of the present invention.

Referring to FIG. 16, a vehicle (1) according to an embodiment of the present invention may include a body (2), a door (3), a glass (4), a headlamp (5), a tail lamp (6), and a camera module (10).

The body (2) may be an exterior component of the vehicle (1). The body (2) may have various forms, such as a frame type or a monocoque type. One or more doors (3) may be attached to a side of the body (2). In addition, the glass (4) may be attached to the front and rear of the upper part of the body (2) (the part where the pillar is formed) and the door (3). The headlamp (5) may be mounted on the front of the lower part of the body (2). The tail lamp (6) may be mounted on the rear of the lower part of the body (2).

A camera module (10) may be installed in the side of the body (2) or in the front of one or more of the doors (3). The camera module (10) may be installed in front of the glass (4) that is attached to the door (3). In other words, in the vehicle (1) of this embodiment, the side mirror may be replaced with the camera module (10).

The camera module (10) can capture images of both sides of the rear of the vehicle. The images captured by the camera module (10) can be electrically connected to the display part (not shown) via an electronic control unit (ECU). Therefore, the images captured by the camera module (10) can be controlled by the ECU and played on the display part.

An interior space for a driver may be formed inside the body (2). A display part may be installed inside the body (2). The display part can output images taken by the camera module (10). The display part may be installed on the dashboard (not shown) inside the body (2).

The installation form of the camera module (10) in the vehicle (1) is exemplary, and the camera module (10) may be used in one or more of the front camera, side camera, rear camera, and black box of the vehicle (1).

Hereinafter, the camera module according to the exemplary embodiment will be explained with reference to the drawings.

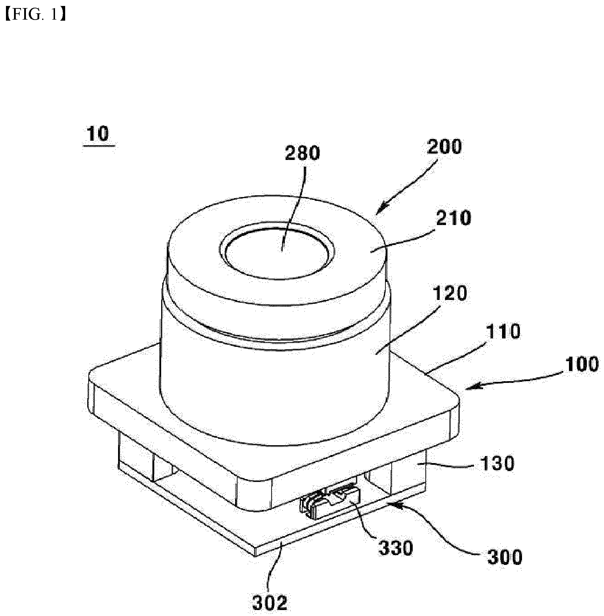

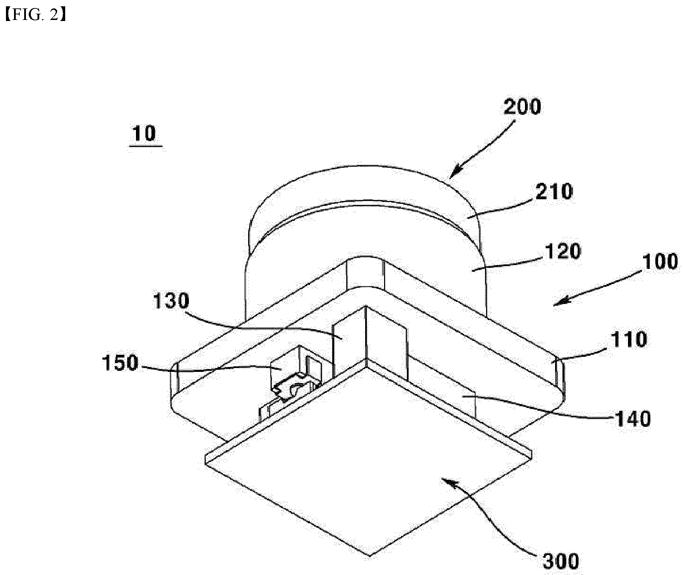

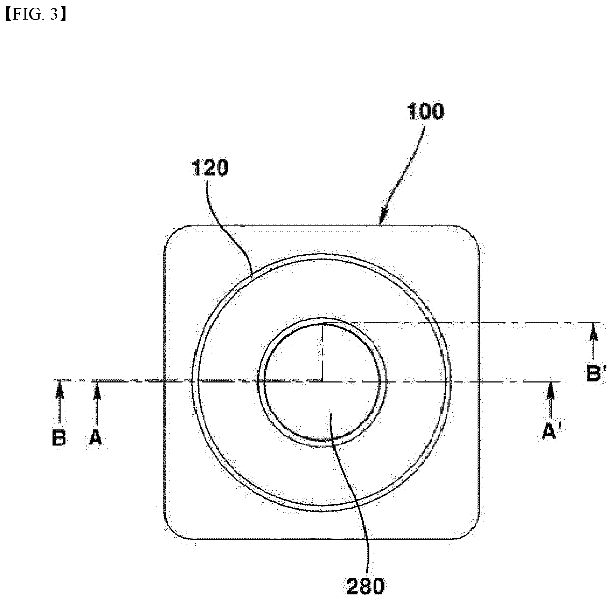

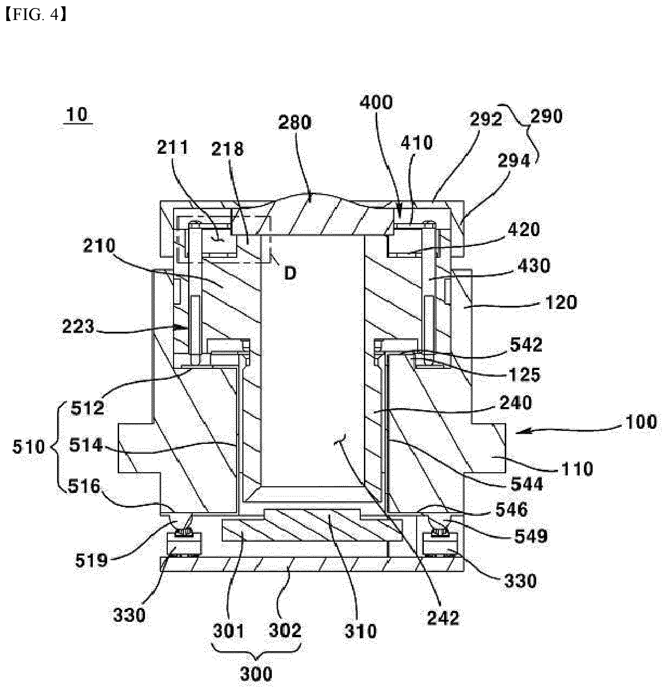

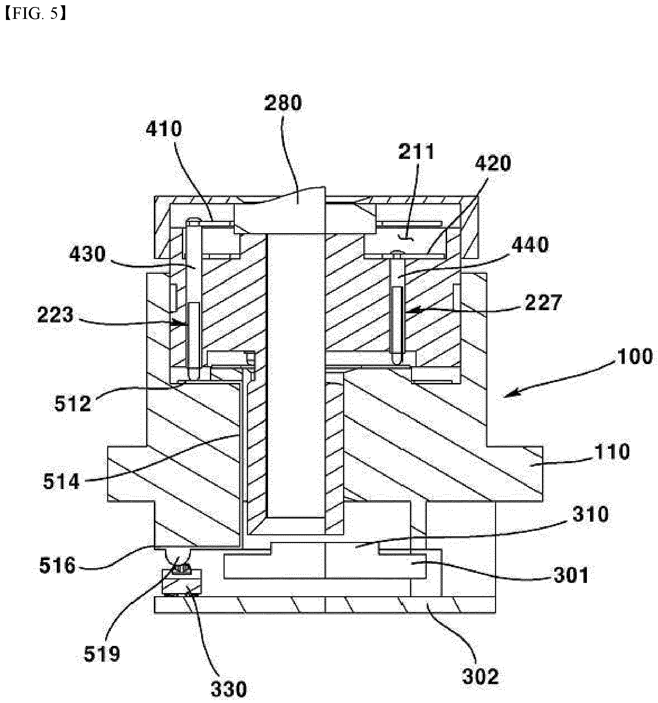

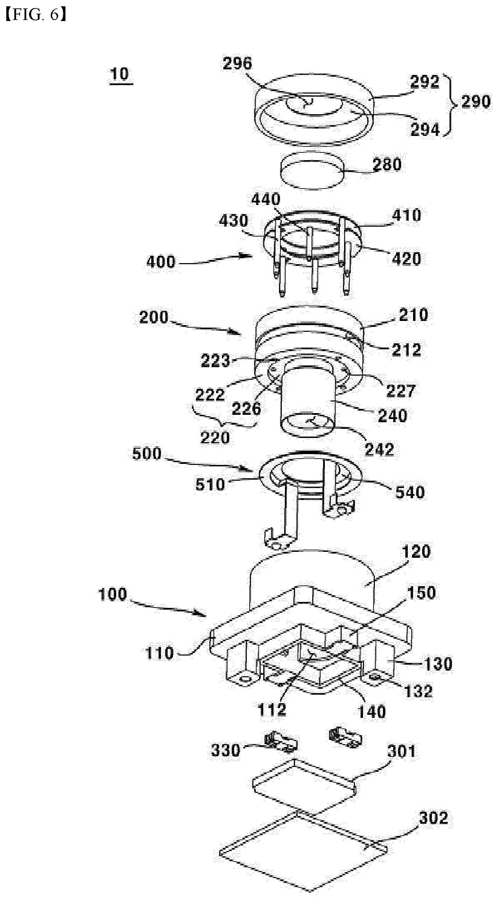

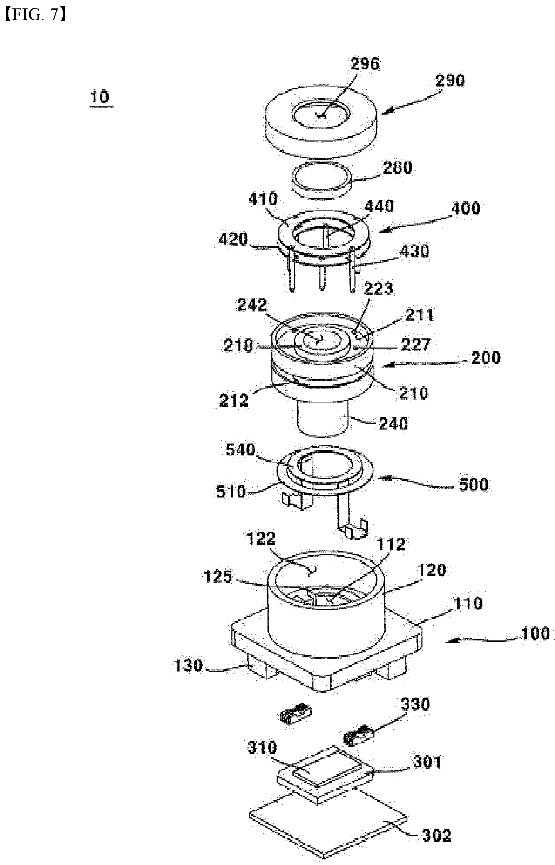

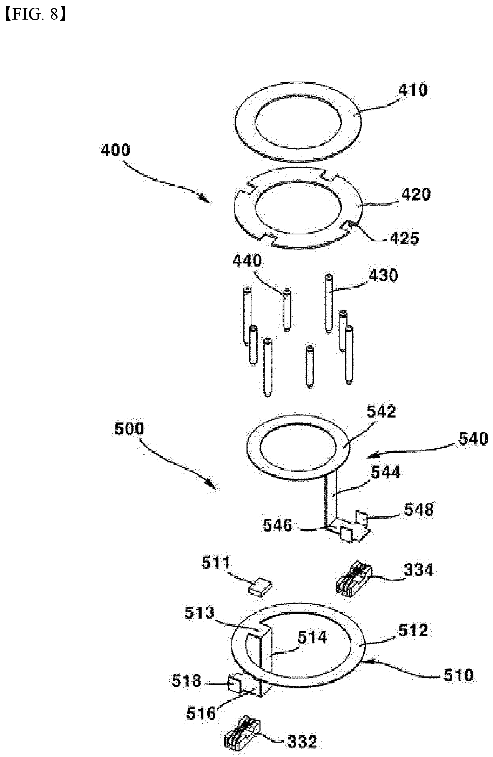

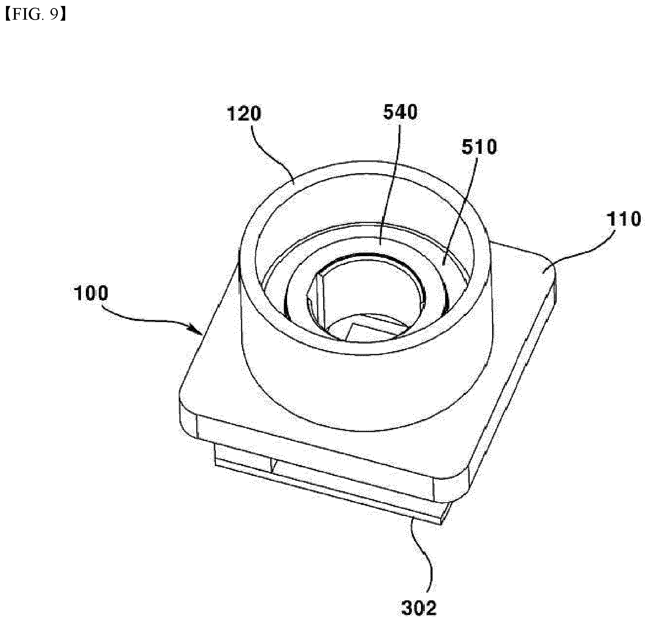

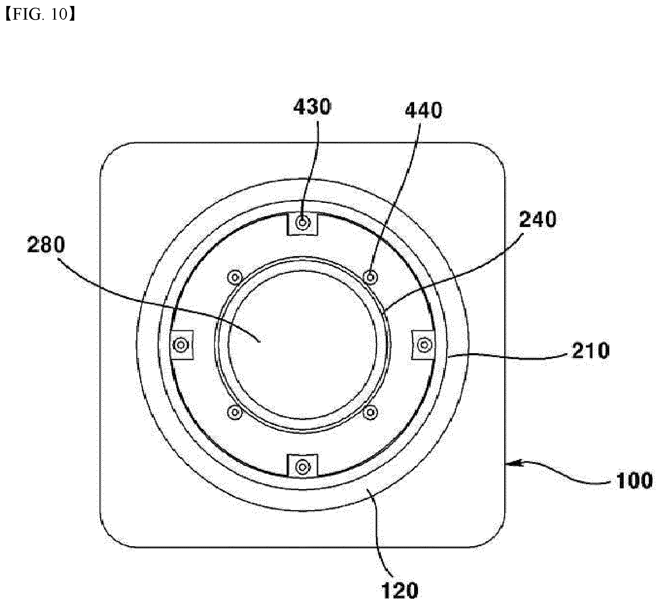

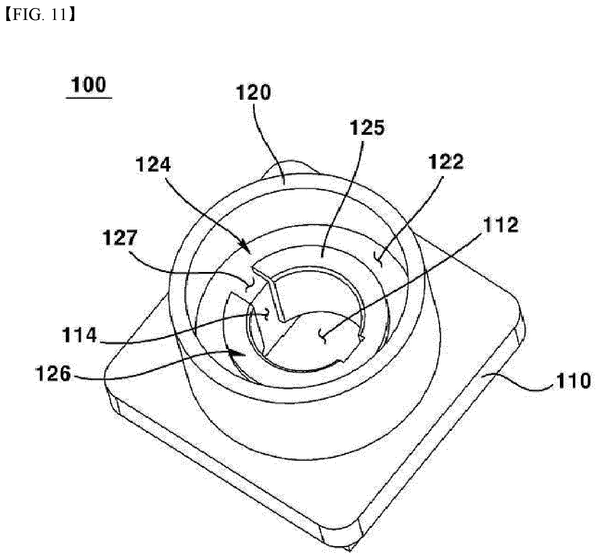

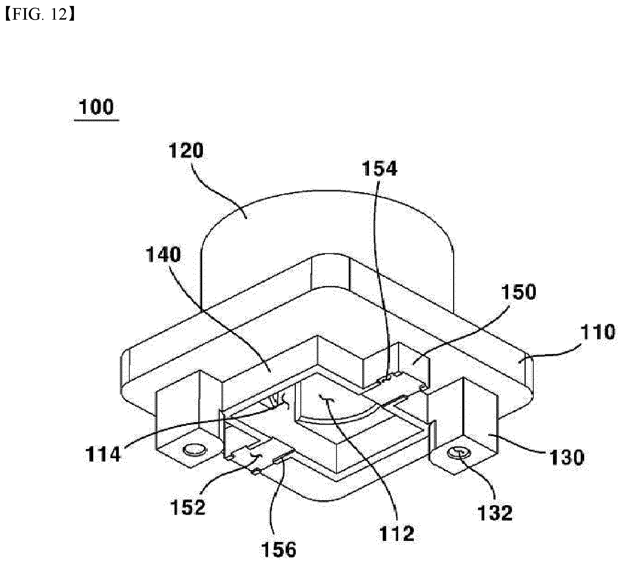

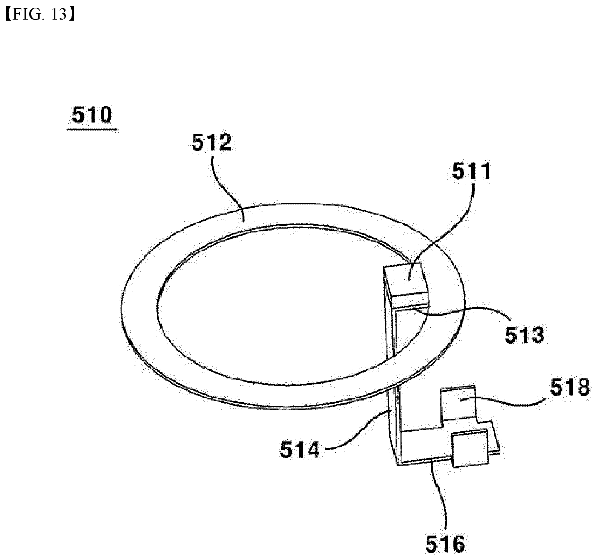

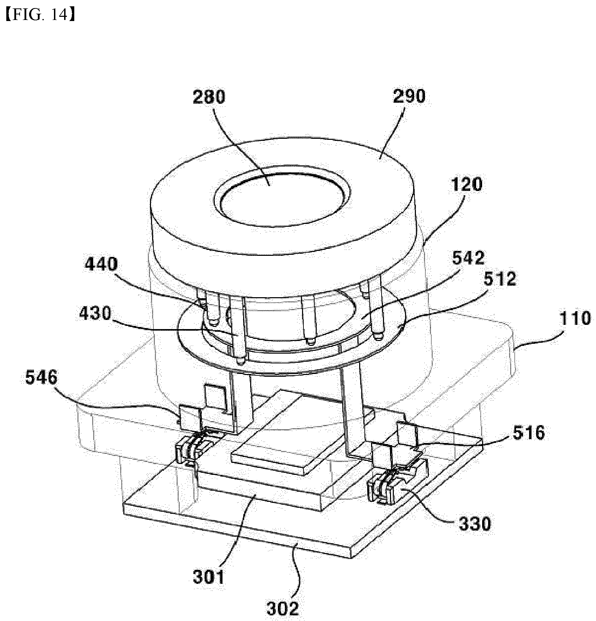

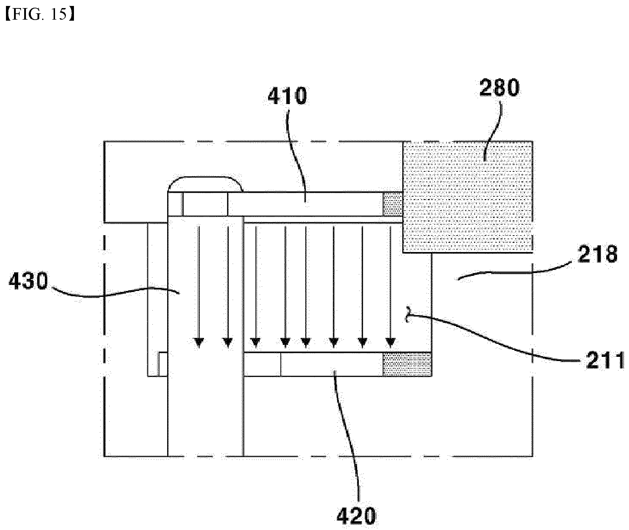

FIG. 1 is a perspective view of the exterior of a camera module according to an embodiment of the present invention, FIG. 2 is a drawing of FIG. 1 from a different angle, FIG. 3 is a top view of a camera module according to an embodiment of the present invention, FIG. 4 is a cross-sectional view of FIG. 3, FIG. 5 is a cross-sectional view of B-B' in FIG. 3, FIG. 6 is an exploded perspective view of a camera module according to an embodiment of the present invention, FIG. 7 is a drawing of FIG. 6 from a different angle, FIG. 8 is an exploded perspective view of the power connection structure within a camera module according to an embodiment of the present invention, FIG. 9 is a perspective view showing a coupled structure between a body and a printed circuit board according to an embodiment of the present invention, FIG. 10 is a top view showing a body and an upper surface of a lens barrel according to an embodiment of the present invention, FIG. 11 is a perspective view showing an upper surface of the body according to an embodiment of the present invention, FIG. 12 is a perspective view of a lower surface of a body according to an embodiment of the present invention, FIG. 13 is a perspective view of the first connection member according to an embodiment of the present invention, FIG. 14 is a drawing for explaining a power connection structure within a camera module according to an embodiment of the present invention, and FIG. 15 is a drawing that magnifies D in FIG. 4.

Referring to FIGS. 1 to 15, the camera module (10) according to an embodiment of the present invention may include a body (100), a lens barrel (200), a substrate module (300), a heating member, and a connection member.

The camera module (10) may include a body (100). The body (100) may be named as any one of the front body, upper housing, or first housing.
The body (100) may be made of metal or plastic.

The body (100) may include a body part (110) and a barrel part (120). The body (100) may include a space in a shape that penetrates a lower surface from an upper surface. Through the space, an image sensor (310) and a lens (280) described later may be arranged facing each other in the optical axis direction.
The body part (110) may be disposed in the lower portion of the barrel part (120). The body part (110) may have a square cross-section. The body part (110) may have a flange shape that protrudes outward from the side of the body (100) more than other areas. A first space (112) may be formed on an inner side of the body part (110) so that at least a portion of the lens barrel (200) is coupled thereto. The first space (112) may have a circular cross-section. At least a portion of the first space (112) may be disposed so as to overlap in a direction perpendicular to the optical axis with the body part (110). Another portion of the first space (112) may be disposed so as to overlap in a direction perpendicular to the optical axis with the barrel part (120).

A guide groove (114) that is shaped to be recessed outward more than in other areas may be formed on the inner surface of the first space (112). The guide groove (114) may be provided in multiple numbers and may be arranged symmetrically with respect to the center of the first space (112). The guide groove (114) may be connected from an upper end to a lower end of the first space (112). The connection part (514, 544, see FIG. 8) of connection part (500) described later may be coupled to the guide groove (114).

A first protrusion (130) may be formed on a lower surface of the body part (110) so as to protrude downward from the other areas. The first protrusion (130) may be provided in multiple numbers and can be arranged facing each other with respect to the center of the body part (110). For example, the multiple first protrusions (130) may be arranged so that they are each adjacent to the two corners facing each other on the lower surface of the body part (110). The lower surface of the first protrusion (130) can be in contact with the substrate module (300). The lower surface of the first protrusion (130) can be in contact with an upper surface of a second substrate (302) described later. A screw hole (132) may be formed on the lower surface of the first protrusion (130). The second substrate (302) can be screwed to the lower surface of the body (100) through the screw hole (132).

A second protrusion (140) may be formed on the lower surface of the body part (110) that protrudes downward from the other areas. The second protrusion (140) may be disposed on an inside of the plurality of the first protrusions (130). The corner region of the second protrusion (140) facing the first protrusion (130) may be connected to the first protrusion (130).

The second protrusion (140) may have a rectangular cross-sectional shape. The cross-sectional shape of the second protrusion (140) may be formed to correspond to the cross-sectional shape of a first substrate (301) described later. The lower surface of the second protrusion (140) may be in contact with at least a portion of the upper surface of the first substrate (301). At least a portion of the lower surface of the second protrusion (140) may be spaced apart from the upper surface of the first substrate (301) in the optical axis direction by a predetermined distance.

A connection part guide (150) may be disposed on the lower surface of the body part (110). The connection part guide (150) may have a shape that protrudes outward from the lower surface of the body part (110) more than other areas. The connection part guide (150) may have a shape that protrudes outward from the lower surface of the second protrusion (140) in a direction perpendicular to the optical axis. The connection part guides (150) may be provided in multiple numbers and may be disposed opposite to each other with respect to the second protrusion (140). The connection part guide (150) may be formed as one body with the second protrusion (140). The connection part guide (150) may have a rectangular cross-sectional shape.

The lower surface of the connection part guide (150) may be formed with a guide groove (152) into which the lower end (516, 546, see FIG. 8) of the connection part (500) described below is coupled. The guide groove (152) may be a groove that is recessed upward from other areas. The bottom surface of the guide groove (152) may be spaced apart from the upper surface of the first substrate (301) in the optical axis direction.

A fence part (156) may be formed at the bottom edge of the connection part guide (150). The fence part (156) may be formed to protrude downward from the bottom surface of the guide groove (152). The fence part (156) may form the edge of the connection part guide (150). At least one or more coupling grooves (154) may be formed in the fence portion (156). The coupling grooves (154) may be disposed to compartmentalize the fence part (156) into two or more areas. The bottom surface of the coupling groove (154) may be disposed to form the same height as the bottom surface of the guide groove (152). The coupling groove (154) may be connected to the guide groove (152). The coupling groove (154) may be connected to a rib (518) of the connection part (500) to be described later. The coupling groove (154) may be provided in multiple numbers and may be disposed in a mutually opposite direction perpendicular to the optical axis direction.

The barrel part (120) may be disposed on the upper part of the body part (110). The barrel part (120) and the body part (110) may be formed as a single body. The barrel part (120) may have a shape that protrudes upward from the upper surface of the body part (110). The body part (120) may be formed in a ring shape in cross-section.

A second space (122) may be formed on the inside of the barrel part (120). The second space (122) may be connected to the first space (112). The second space (122) and the first space (112) may be connected in the optical axis direction. The cross-sectional area of the second space (122) may be formed to be larger than the cross-sectional area of the first space (112). The bottom surface of the second space (122) may form the upper surface of the barrel part (120).

Referring to FIG. 11, a protrusion (125) may be formed on the bottom surface of the second space (122) that protrudes upward from the other areas. The protrusion (125) may have a ring shape with one side opened radially. The protrusion (125) may be disposed on the upper end of the first space (112), and its inner surface may form the same curved surface as the inner surface of the first space (112). On the upper surface of the protrusion (125), a second mounting surface (126) may be formed that is joined to the lower surface of an upper end part (542) of the second connection part (540) to be described later. Meanwhile, any one of the multiple guide grooves (114) formed on the inner surface of the first space (112) may extend to the inner surface of the protrusion (125).

The protrusion (125) may include an opening (127). The protrusion (125) may have an arc shape due to the opening (127). The opening (127) may be shaped to penetrate the outer surface from the inner surface of the protrusion (125) in a radial direction. At least a portion of the first connection part (510) described below may be coupled to the opening (127). The guide protrusion (511, see FIG. 13) may be coupled to the opening (127).

A first mounting (installation) surface (124) may be formed on the outer side of the protrusion (125) among the bottom surfaces of the second space (122). The first mounting surface (124) may be disposed in a staircase manner in the optical axis direction with respect to the second installation surface (126) formed on the upper surface of the protrusion (125). The first mounting surface (124) may be disposed on the lower side of the second mounting surface (126). The first mounting surface (124) may have a cross-section in the shape of a ring. The first mounting surface (124) may form a plane with the bottom surface of the opening (127). The upper end (512, see FIG. 8) of the first connection part (510) described below may be coupled to the first mounting surface (124). The lower surface of the upper end (512) may be in contact with the first mounting surface (124).

The lens barrel (200) may be coupled to the body (100). The lens barrel (200) may be disposed so that at least a portion thereof is coupled to the space within the body (100) and another portion protrudes upward from the body (100). The lens barrel (200) may include a first region (210) and a second region (240) that is disposed in the lower surface of the first region (210). A space (242, see FIG. 4) may be formed in the interior of the lens barrel (200) into which the lens to be described later may be coupled. The space (242) may be shaped to penetrate the lower surface from the upper surface of the lens barrel (200).

At least a portion of the first region (210) may be disposed in the second space (122), and another portion may be disposed on the body (100). The first region (210) may have a circular cross-sectional shape. The first region (210) may be formed with a larger cross-sectional area than the second region (240). The cross-sectional shape of the first region (210) may be formed corresponding to the cross-sectional shape of the second space (122). The first region (210) may be screwed to the inner surface of the second space (122). In this case, a thread or a screw groove of a shape corresponding to each other may be formed on the outer surface of the first region (210) and the inner surface of the second space (122).

A sealing member coupling groove (212) may be formed on the outer surface of the first region (210) in which the sealing member (not shown) is coupled. The sealing member coupling groove (212) may be shaped to be recessed inwardly relative to other areas. The sealing member coupling groove (212) may have a ring-shaped cross-section. The sealing member coupling groove (212) may be disposed to face the inner surface of the barrel part (120). A sealing member is coupled in the sealing member coupling groove (212), thereby sealing the space between the inner surface of the barrel part (120) and the outer surface of the first region (210).

On the upper surface of the first region (210), a first groove (211, see FIG. 7) may be formed, which is shaped to be recessed downward relative to other areas. The lens (280) mentioned below may be disposed in the first groove (211). A partition wall may be formed on the outside of the first groove (211) to enclose the perimeter of the first groove (211).

A lens coupling part (218) may be disposed on the bottom surface of the first groove (211) in a shape that protrudes upward from other areas. The lens coupling part (218) has a cross-section in the shape of a ring and can support the lower surface of the lens (280). The upper surface of the lens coupling part (218) can be in contact with an exiting surface of the lens (280). The lens coupling part (218) may be disposed at the upper end of the space (242).

The lower surface (220, see FIG. 6) of the first region (210) may be formed with a first lower surface (222) and a second lower surface (226) that are disposed in a staircase manner in the vertical direction. The first lower surface (222) and the second lower surface (226) may each have a ring-shaped cross-section. The first lower surface (222) may be disposed on the outside of the second lower surface (226). The first lower surface (222) may be disposed lower than the second lower surface (226). The first lower surface (222) may be disposed facing the first mounting surface (124, see FIG. 11) in the optical axis direction. The second lower surface (226) may be arranged to face the second mounting (installation) surface (126) in the optical axis direction. The second lower surface (226) may be named as the second groove because it is formed to be recessed upward compared to other areas.

The first region (210) may include a first hole (223) and a second hole (227).

The first hole (223) may be shaped to penetrate the bottom surface of the first groove (211) from the upper surface of the first region (210). The first hole (223) may be shaped to penetrate the first lower surface (222) from the bottom surface of the first groove (211). The first hole (223) may be provided with multiple holes and may be arranged at a mutually spaced-apart manner along the circumferential direction. For example, the first hole (223) may be provided with four holes and may be arranged at a distance of 90 degrees in the circumferential direction. The first hole (223) may be coupled with the first bus bar (430) described below.

The second hole (227) may be shaped to penetrate the lower surface from the upper surface of the first region (210). The second hole (227) may be formed to penetrate the second lower surface (226) from the bottom surface of the first groove (211). The second hole (227) may be provided in multiple numbers and may be arranged at a mutually spaced-apart manner from each other along the circumferential direction. Multiple second holes (227) may be disposed inside multiple first holes (223). For example, the second hole (227) may be equipped with four holes, which may be disposed so that they are spaced apart 90 degrees in the circumferential direction. The second hole (227) may be coupled with a second bus bar (440) described below.

The second region (240) may be disposed in the lower surface of the first region (210). The second region (240) may be disposed in the first space (112). The cross-sectional shape of the second region (240) may be formed corresponding to the cross-sectional shape of the first space (112). The second region (240) may be screwed to the first space (112). To this end, a thread or a thread groove may be formed on the outer surface of the second region (240) and on the inner surface of the first space (112), respectively, for screwing.

A lens may be disposed in a space (242) inside the lens barrel (200). The lens may be provided with multiple lenses, which may be mutually spaced apart from each other in the direction of the optical axis. The lens may be aligned with an image sensor (310). The lens may be disposed facing the image sensor (310) in the direction of the optical axis. The lens may be disposed facing the lens (280) described later in the optical axis direction. In this case, the lens (280) disposed on the lens barrel (200) is the outermost lens, called the glass, and may be distinguished from the lens disposed in the space (242) inside the lens barrel (200).

A lens (280) may be disposed in the lens barrel (200). At least a portion of the lens (280) may be disposed in the first groove (211), and the other portion may be disposed so that it protrudes upward from the lens barrel (200). As mentioned above, the lens (280) may be referred to as the outermost lens, the glass. The lens (280) has an incident surface and an exiting surface, and the exiting surface may be supported by the upper surface of the lens coupling part (218). The incident surface of the lens (280) may be exposed to an upward direction of the camera module (10).

The camera module (10) may include a retainer (290). The retainer (290) may be coupled to the upper surface of the lens barrel (200). The retainer (290) can be screwed onto the lens barrel (200). The retainer (290) may be disposed to cover at least a portion of the lens (280) incident surface.

The retainer (290) may include a first plate part (292) and a second plate part (294). The first plate part (292) and the second plate part (294) may be disposed vertically with respect to each other. The first plate part (292) may form an upper surface of the camera module (10). The first plate part (292) may include a hole (296) for exposing the lens (280) to the outside. At least a portion of the first plate part (292) may be disposed to cover the edge of the lens (280) incident surface.

Meanwhile, an inclined surface may be formed on the end surface of the first plate part (292) forming the inner surface of the hole (296). **In** this case, moisture due to the formation of frost on the surface of the lens (280) can be prevented from re-entering the space within the camera module (10).

The second plate part (294) may be formed to extend downward from the edge of the first plate part (292). The inner surface of the second plate part (294) may be disposed to wrap a portion of the lens barrel (200). The inner surface of the second plate part (294) can be screwed to the outer surface of the lens barrel (200).

The camera module (10) may include a substrate module (300). The substrate module (300) may be disposed in the lower surface of the body (100). The substrate module (300) may be coupled to the lower surface of the body (100).

The substrate module (300) may include a first substrate (301) and a second substrate (302).

The first substrate (301) may include a printed circuit board. The first substrate (301) may be disposed on the second substrate (302). An image sensor (310) may be disposed on the first substrate (301). The first substrate (301) may be called a sensor substrate. The upper surface of the first substrate (301) may be in contact with the lower surface of the second protrusion (140). The cross-sectional area of the first substrate (301) may be smaller than the cross-sectional area of the second substrate (302).

The image sensor (310) to be disposed on the first substrate (301) may be aligned with the lens to be disposed in the lens barrel (200). The image sensor (310) may be disposed facing the optical axis of the lens.

The second substrate (302) may be disposed on the lower side of the first substrate (301). The second substrate (302) may be spaced apart from the first substrate (301) in the optical axis direction. The second substrate (302) may include a printed circuit board. The second substrate (302) can supply power to the heating member, which will be described later. The second substrate (302) may be disposed parallel to the first substrate (301). The second substrate (302) can be electrically connected to a connector (not shown) for electrical connection with external terminals.

The second substrate (302) may be coupled to the lower surface of the body (100). The second substrate (302) can be screwed to the lower surface of the body (100). The upper surface of the second substrate (302) can be screwed to the lower surface of the first protrusion (130). The cross-sectional area of the second substrate (302) may be larger than the cross-sectional area of the first substrate (301).

A connector (330) may be disposed on the second substrate (302). The connector (330) can be combined with a connection member for electrically connecting the substrate module (300) and the heating member. The connector (330) may be mounted on the second substrate (302). The connector (330) may be disposed so that it does not overlap with the first substrate (301) in the optical axis direction. The connector (330) may be coupled with the contact terminal (519, 549, see FIG. 4) of the connection part (500) to be described later. The contact terminals (519, 549) may be contacted on the connector (330).

The connector (330) may include a first connector (332, see FIG. 8) connected to the first connection part (510) described below, and a second connector (334, see FIG. 8) connected to the second connection part (540) described below. The first connector (332) and the second connector (334) may be arranged symmetrically with respect to the image sensor (310).

The substrate module (300) may include a third substrate electrically connecting the first substrate (301) and the second substrate (302), and the third substrate may be a flexible printed circuit board (FPCB).

Meanwhile, an additional body may be coupled to the lower surface of the body (100), and accordingly, the substrate module (300) may be disposed between the body (100) and the additional body. The additional body may be named as either the rear body, the lower housing, or the second housing. The substrate module (300) may be disposed in the inner space formed by the combination of the body (100) and the additional body.

The camera module (10) may include a heating member. The heating member may provide heat to the lens (280). This may remove the frost formed on the surface of the lens (280). The heating temperature of the lens (280) through the heating member may be less than 100 degrees.

The heating member may include a heating layer and a plurality of electrodes (410, 420) disposed on the surface of the heating layer.

The heating layer may be disposed on the outside of the lens (280). The heating layer may be disposed in the first groove (211). The heating layer may be placed between the first groove (211) and the retainer (290).

The heating layer in the camera module (10) according to this embodiment may be a PTC heater (Positive Temperature Coefficient heater).

The heating layer may include a PTC (Positive Temperature Coefficient) material. The heating layer may include a PTC element, an electrode plate, and an insulating plate. The heating layer may include heating ink or resin applied to a sheet with a circuit pattern formed thereon. The heating layer may be disposed on the lens barrel (200). The heating layer may be disposed in the first groove (211). The heating layer may be in contact with the inner surface of the retainer (290) or the side surface of the lens (280). The heating layer can generate heat by providing power through the connection member described later.

The electrodes (410, 420) may be formed on the surface of the heating layer. For example, the electrodes (410, 420) may include a first electrode (410) disposed on the upper surface of the heating layer and a second electrode (420) disposed on the lower surface of the heating layer. The polarity of the first electrode (410) and the second electrode (420) may be different. According to the exemplary embodiment, as shown in FIG. 15, multiple electrodes (410, 420) with different polarities may be disposed in the up-down direction, which is the optical axis direction, with respect to the heating layer, so that a uniform electric field and current density can be formed throughout the heating layer. This ensures uniform heating performance of the heating layer.

As shown in FIG. 8, the first electrode (410) may have a ring-shaped cross-section. The first electrode (410) may be disposed on the upper surface of the heating layer. The first electrode (410) may be disposed in the first groove (211). The first electrode (410) may be disposed on the outside of the lens (280). The first electrode (410) may be arranged in a direction away (spaced apart) from the second electrode (420) in the optical axis direction. The first electrode (410) may be coupled with the first bus bar (430) described later. The lower surface of the first electrode (410) may come into contact with the upper end of the first bus bar (430). The first electrode (410) may have a first polarity.

The second electrode (420) may have a ring-shaped cross-section. The second electrode (410) may be disposed on the lower surface of the heating layer. The second electrode (420) may be disposed in the first groove (211). The second electrode (420) may be placed outside the lens coupling part (218, see FIG. 7). In this case, the heating layer can be understood to be placed between the first electrode (410) and the second electrode (420) within the first groove (211). The second electrode (420) may be disposed spaced apart from the first electrode (410) in the optical axis direction. The second electrode (420) may be coupled with the second bus bar (440) described later. The lower surface of the second electrode (420) may be in contact with the upper surface of the second bus bar (440). The second electrode (420) may have a second polarity different from that of the first polarity.

A through hole (425) may be formed in the second electrode (420). The through hole (425) may be shaped to penetrate the lower surface from the upper surface of the second electrode (420). The through holes (425) may be provided in multiple numbers and may be arranged at a circumferential direction along the outer circumference of the second electrode (420). The through holes (425) may be disposed so that the first bus bar (430) passes therethrough. As mentioned above, since the first electrode (410) is disposed above the second electrode (420), the placement area of the first bus bar (430) may be set through the through hole (425).

The camera module (10) may include a connection member. The connection member may electrically connect the heating member and the substrate module (300). Power may be supplied to the heating member by means of an electrical connection between the heating member and the substrate module (300) via the connection member.

The connection member may include a bus bar (430, 440) and a connection part (500).

The bus bar (430, 440) may electrically connect the electrode (410, 420) and the connection part (500). The bus bar (430, 440) may include the first bus bar (430) connecting the first electrode (410) and a first connection part (510) described later, and the second bus bar (430) connecting the second electrode (420) and a second connection part (540) described later. The busbar (430, 440) may be a pogo pin. In this case, the busbar (430, 440) may include a body part and a pin part that is elastically and reciprocally movable in an upward and downward direction with respect to the body part, which is disposed at the upper and lower ends of the body part. For example, the pin part may include an upper pin part disposed at the upper surface of the body part and a lower pin part disposed at the lower surface of the body part, and the upper pin part may be in contact with the electrode (410, 420) and the lower pin part may be in contact with the connection part (500). In addition to the above, the busbar (430, 440) may include an elastic part that is disposed within the body part and provides elastic force to the upper pin part and the lower pin part, respectively. The elastic part may be a spring. Accordingly, the electrode (410, 420) and the connection part (500) may be elastically connected through the bus bar (430, 440).

The first bus bar (430) may be electrically connected to the first electrode (410) and the first connection part (510). The first bus bar (430) may be provided in multiple numbers and may be disposed to be spaced apart along the circumferential direction of the lens barrel (200). The first bus bar (430) may be provided with four pieces and may be disposed to form a gap of 90 degrees in the circumferential direction with the adjacent first bus bar (430). The first bus bar (430) may have a first polarity. The first bus bar (430) may be coupled to the first hole (223) of the lens barrel (200). The first bus bar (430) may be disposed to pass through the first hole (223). The upper end of the first bus bar (430) may be disposed to protrude upward from the bottom surface of the first groove (211), and the lower end of the first bus bar (430) may be disposed to protrude downward from the lower surface (220) of the first region (210). The lower end of the first bus bar (430) may protrude downward from the first lower surface (222) of the lower surface (220) of the first area (210). The lower end of the first bus bar (430) may contact the upper surface of the first connection part (510) described later.

The second bus bar (440) may be electrically connected to the second electrode (420) and the second connection part (540). The second bus bar (440) may be provided in multiple numbers and may be disposed at a mutually spaced apart along the circumferential direction of the lens barrel (200). The second bus bar (440) may be equipped with four, and can be disposed to form a gap of 90 degrees in the circumferential direction with the adjacent second bus bar (440). The second bus bar (440) may have a second polarity that is opposite to the first polarity. The second bus bar (440) may be coupled to the second hole (227) of the lens barrel (200). The second bus bar (440) can be positioned to pass through the second hole (227). The upper end of the second bus bar (440) may be disposed to protrude upward from the bottom surface of the first groove (211), and the lower end of the second bus bar (440) may be disposed to protrude downward from the lower surface (220) of the first region (210). The lower end of the second bus bar (440) may protrude downward from the second lower surface (226) of the first region (210) of the first surface (220). The lower end of the second bus bar (440) may be in contact with the upper surface of the second connection part (540) described later. The lower end of the second bus bar (440) may be disposed above the lower end of the first bus bar (430).

As shown in FIG. 10, multiple first bus bars (430) and multiple second bus bars (440) may be disposed so that they do not overlap with each other in the radial direction. In this case, a plurality of second bus bars (440) may be arranged to overlap in a region that compartmentalizes a plurality of adjacent first bus bars (430) in a circumferential direction by one-half and in a radial direction. Based on a single first bus bar (430), the first bus bar (430) may be arranged so that the second bus bar (440) adjacent thereto forms a gap of 45 degrees in the circumferential direction.

For example, if the first bus bar (430) includes the first-1 bus bar and the first-2 bus bar spaced apart in the circumferential direction from the first-1 bus bar, and the second bus bar (440) includes the second-1 bus bar and the second-2 bus bar spaced apart in the circumferential direction from the second-1 bus bar, the first-1 bus bar may be understood as being disposed between the second-1 bus bar and the second-2 bus bar. In this case, the first-1 bus bar and the second-1 bus bar may be disposed so that they do not overlap in the radial direction of the lens barrel (200).

As mentioned above, the body (100) and the lens barrel (200) may be connected by screwing. At this time, due to the above-mentioned arrangement of the plurality of first bus bars (430) and the plurality of second bus bars (440), when the lens barrel (200) is screwed into the body (100), there is an advantage in that the assembly process can be made easier because there is no need to consider the directionality according to the rotation for the contact between the lower end of the first bus bar (430) and the upper surface of the first connection part (510) described below, and the lower end of the second bus bar (440) and the upper surface of the second connection part (540) described below.

The connection member may include a connection part (500). The connection part (500) may include a first connection part (510) that electrically connects the first bus bar (430) and the substrate module (300), and a second connection part (540) that electrically connects the second bus bar (440) and the substrate module (300).

The first connection part (510) may include a first upper part (512), a first lower part (516), and a first central part (514). The first upper part (512), the first lower part (516), and the first central part (514) may be formed as a single body. The first connection part (510) may have the first polarity.

The first upper part (512) may be disposed in the second space (122, see FIG. 11) of the body (100). The first upper part (512) can be coupled to the first mounting surface (124) of the body (100). The first upper part (512) may have a cross-section in the shape of a ring. The first upper part (512) may be disposed on the lower side in the optical axis direction than the second upper part (542) to be described later. The cross-sectional area of the first upper part (512) may be formed to be larger than the cross-sectional area of the second upper part (542). The inner surface of the first upper part (512) may be arranged to wrap around the outer periphery of the protrusion (125) of the body (100). The upper surface of the first upper part (512) can be in contact with the lower surface of the first bus bar (430).

The first lower part (516) may be coupled to the lower surface of the body (100). The first lower part (516) may be coupled to the lower surface of the connection part guide (150) formed on the lower surface of the body (100). The first lower part (516) may be disposed parallel to the first upper part (512). The first lower part (516) may be disposed so that at least a portion thereof overlaps the first upper part (512) in the optical axis direction.

The first lower part (516) may be coupled to the guide groove (152) formed on the lower surface of the connection part guide (150). The cross-sectional shape of the first lower part (516) may be formed to correspond to the cross-sectional shape of the guide groove (152). The lower surface of the first lower part (516) may be coupled to the upper surface of the first connector (332). The lower surface of the first lower part (516) has a shape that protrudes downward from other areas, and a first contact terminal (519) that is coupled to the first connector (332) can be formed. The first contact terminal (519) may be in the shape of a protrusion.

The first connection part (510) may include a rib (518) that is coupled to the coupling groove (154). The rib (518) may have an area that is perpendicular to the first lower part (516) at least in part. The rib (518) may include a first coupling region extending in a direction perpendicular to the optical axis from the first lower part (516) and a second coupling region extending upward in the direction of the optical axis from an end of the first coupling region. The rib (518) may be arranged to penetrate the fence part (156, see FIG. 12). The rib (518) may be coupled to the coupling groove (154). The rib (518) can be in contact with at least a portion of the connecting guide (150) on its side. Due to the rib (518) and the first lower part (516), the cross-sectional shape of the lower end of the first connection part (510) may have a roughly ' 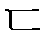 ' shape.

The first central part (514) may be disposed to connect the first upper part (512) and the first lower part (516). The first central part (514) may be disposed vertically with respect to the first upper part (512) and the first lower part (516). The first central part (514) may be disposed within the first space (112). The first central part (514) may be coupled to the guide groove (114, see FIG.11) within the first space (112). The first central part (514) may be connected to the first upper part (512) at the upper end and to the first lower part (516) at the lower end.

In addition to this, the first connection part (510) may include an extension part (513, see FIG. 13) connecting the upper end of the first central part (514) and the inner surface of the first upper part (512). The extension part (513) may be disposed parallel to the first upper part (512) and the first lower part (516) and perpendicular to the first central part (514). The extension part (513) may connect the first upper part (512) and the first central part (514). The extension part (513) may be coupled to the opening (127) of the protrusion (125) of the body (100). Thereby, the position of the first connection part (510) within the second space (122) can be guided.

The first connection part (510) may include a guide protrusion (511). The guide protrusion (511) may be disposed on the extension part (513). The guide protrusion (511) may be coupled to an opening (127) of the body (100). The upper surface of the guide protrusion (511) may be disposed to form the same plane as the upper surface of the protrusion (125, see FIG. 11). The guide protrusion (511) can reinforce the thickness of the first connection part (510) that is disposed in the opening (127).

The second connection part (540) may include a second upper part (542), a second lower part (546), and a second central part (544). The second upper part (542), the second lower part (546), and the second central part (544) may be formed as a single body. The second connection part (540) may have a second polarity opposite to the first polarity.

The second upper part (542) may be disposed in a second space (122, see FIG. 11) of the body (100). The second upper part (542) may be disposed on the protrusion (125) of the body (100). The second upper part (542) may be coupled to the second mounting surface (126) of the body (100). The second upper part (542) may have a cross-section in the shape of a ring. The second upper part (542) may be disposed on the upper side in the optical axis direction than the first upper part (512). The second upper part (542) may be disposed on the inside of the first upper part (512) in the radial direction. The cross-sectional area of the second upper part (542) can be formed to be smaller than the cross-sectional area of the first upper part (512). The upper surface of the second upper part (542) may be in contact with the lower surface of the second bus bar (440).

The second lower part (546) may be coupled to the lower surface of the body (100). The second lower part (546) may be coupled to the lower surface of the connection part guide (150) formed on the lower surface of the body (100). In this case, the connection part guide (150) to which the second lower part (546) is coupled may be different from the connection par guide (150) to which the first lower part (516) is coupled. In view of this, the connection part guide (150) to which the first lower part (516) is connected may be named the first connection part guide, and the connection guide (150) to which the second lower part (546) is connected may be named the second connection part guide. The second lower part (546) may be disposed parallel to the second upper part (542).

The second lower part (546) may be coupled to the guide groove (152) formed on the lower surface of the connection part guide (150). The cross-sectional shape of the second lower part (546) may be formed to correspond to the cross-sectional shape of the guide groove (152). The lower surface of the second lower part (546) may be coupled to the upper surface of the second connector (334). The lower surface of the second lower part (546) has a shape that protrudes downward from the other areas, and a second contact terminal (549, see FIG. 4) that is coupled with the second connector (334) may be formed. The first contact terminal (549) may be in the shape of a protrusion.

The second connection part (540) may include a rib (548) that is coupled to the coupling groove (154). The rib (548) may have an area that is perpendicular to the second lower part (546) at least in part. The rib (548) may include a first coupling region extending in a direction perpendicular to the optical axis from the second lower part (546) and a second couplin region extending upward in the direction of the optical axis from an end of the first coupling region. The rib (548) may be disposed to penetrate the fence part (156). The rib (548) may be coupled to the coupling groove (154). The rib (548) may be in contact with at least a portion of the connection part guide (150) on its side. Due to the rib (548) and the second lower part (546), the cross-sectional shape of the lower end of the second connection part (540) may have a roughly ' 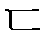 ' shape.

The second central part (544) may be disposed to connect the second upper part (542) and the second lower part (546). The second central part (544) may be disposed vertically with respect to the second upper part (542) and the second lower part (546). The second central part (544) may be disposed within the first space (112). The second central part (544) may be coupled to the guide groove (114, see FIG. 11) within the first space (112). In this case, the guide groove (114) to which the second central part (544) is coupled may be different from the guide groove (114) to which the first central part (514) is coupled. The guide groove (114) to which the second central part (544) is coupled and the guide groove (114) to which the first central part (514) is coupled can be symmetrically disposed with respect to the center of the first space (112). The second central part (544) may be connected to the second upper part (542) at the upper end and to the second lower part (546) at the lower end.

According to the above structure, the advantages of compactly placing the connection member for connecting the body, heating member in the lens barrel and the substrate module are that it can improve the assembly of the camera module while simultaneously providing a stable power connection to the heating member.

In the above, it is not necessarily limited to this embodiment, even though all components constituting the embodiment of the present invention are described as being combined or operated by combining them into one. In other words, within the scope of the present invention, all of its components may be selectively combined and operated in one or more. In addition, the terms 'include,' 'comprise,' or 'have' as used herein should be interpreted to mean that the component may be inherent, unless specifically stated otherwise, and not to exclude other components, but rather to include other components. All terms, including technical or scientific terms, have the same meaning as generally understood by a person with ordinary skill in the art to which the invention pertains, unless otherwise defined. Terms that are commonly used, such as those defined in dictionaries, should be interpreted in accordance with their meaning in the context of the relevant art, and should not be interpreted in an idealized or overly formal sense, unless explicitly defined in the invention.

The above description is merely an illustrative example of the technical idea of the present invention, and those skilled in the art to which the present invention belongs will be able to make various modifications and variations within the scope that does not deviate from the essential characteristics of the present invention. Therefore, the embodiments disclosed in the present invention are not intended to limit the technical idea of the present invention, but are intended to explain it, and the scope of the technical idea of the present invention is not limited by these embodiments. The scope of protection of the present invention should be interpreted by the following claims, and all technical ideas within the scope of the equivalent thereof should be interpreted as being included in the scope of the present invention.

## Claims

1. A camera module, comprising:
a body:
a lens barrel coupled to the body;
a lens disposed at one side of the lens barrel;
a heating member disposed outside the lens;
a substrate module disposed to be spaced apart from the lens in an optical axis direction; and
a connection member for connecting the substrate module and the heating member,
wherein the heating member includes a heating layer, a first electrode disposed on one surface of the heating layer, and a second electrode disposed on other surface of the heating layer, and the first electrode and the second electrode are disposed to be spaced apart from each other in the optical axis direction.

2. A camera module, comprising:
a body;
a lens barrel coupled to the body;
a lens disposed on one side of the lens barrel;
a heating member disposed on outside of the lens;
a substrate module disposed spaced apart from the lens in an optical axis direction;
and
a connection member connecting the substrate module and the heating member,
wherein the connection member includes a plurality of connection parts connected to the substrate module and a plurality of bus bars connected to the heating member, and
the plurality of bus bars include a first bus bar and a second bus bar spaced apart from the first bus bar.

3. The camera module of claim 1, wherein the heating layer includes a resin or a PTC (Positive Temperature Coefficient) material.

4. The camera module of claim 2, wherein the first bus bar and the second bus bar are electrically connected to the plurality of connection parts.

5. The camera module of claim 2, wherein the first bus bar and the second bus bar have different polarities.

6. The camera module of claim 2, wherein the first bus bar and the second bus bar are spaced apart in a direction perpendicular to the optical axis direction.

7. The camera module of claim 2, wherein the first bus bar and the second bus bar are each provided in multiple,
wherein a plurality of first bus bars includes a first-1 bus bar and a first-2 bus bar,
wherein a plurality of second bus bars includes a second-1 bus bar and a second-2 bus bar, and
wherein the first-1 bus bar is disposed between the second-1 bus bar and the second-2 bus bar.

8. The camera module of claim 7, wherein the first-1 bus bar and the second-1 bus bar do not overlap in a radial direction of the lens barrel.

9. The camera module of claim 2, wherein the plurality of connection parts includes a first connection part connected to the first bus bar and a second connection part connected to the second bus bar, and
wherein an upper end of the first connecting part connected to the first bus bar and an upper end of the second connecting part connected to the second bus bar have different heights.

10. The camera module of claim 2, wherein the first connection part and the second connection part are each disposed in at least a portion of a space formed in the body.
